# EUROPÄISCHE PATENTSCHRIFT

(11) **EP 0 539 542 B1**
(45) Veröffentlichungstag und Bekanntmachung des Hinweises auf die Patenterteilung: **06.03.1996**
(21) Anmeldenummer: 92909307.8
(22) Anmeldetag: 29.04.1992
(51) Int. Cl.: G02B 6/38

(54) **STECKVERBINDER FÜR LICHTWELLENLEITER**
SOCKET CONNECTOR FOR LIGHT WAVEGUIDES
CONNECTEUR A FICHES POUR GUIDES D'ONDES LUMINEUSES

(30) Priorität: 30.04.1991 DE 4114156
(43) Veröffentlichungstag der Anmeldung: 05.05.1993
(73) Patentinhaber: FRAMATOME CONNECTORS DEUTSCHLAND GmbH, W-4006 Erkrath (DE)
(72) Erfinder: SCHOSS, Udo, D-4320 Hattingen (DE)
(74) Vertreter: Patentanwälte Beetz - Timpe - Siegfried Schmitt-Fumian - Mayr
(86) Internationale Anmeldenummer: EP9200934
(87) Internationale Veröffentlichungsnummer: WO9219997

(56) Entgegenhaltungen:
- EP-A- 0 156 608
- EP-A- 0 177 937
- EP-A- 0 374 136
- EP-A- 0 382 522

## Beschreibung

Die Erfindung betrifft einen Steckverbinder für Lichtwellenleiter aus vorzugsweise Kunststoff der im Oberbegriff des Anspruchs 1 angegebenen Gattung.

Derartige in verschiedenen Ausführungen bekannte Steckverbinder dienen zur Verbindung, Kopplung und ggf. Verzweigung von Lichtwellenleitern (LWL), die in Form von vielfaserigen Glasfasersträngen oder als monofile Kunststoffleiter von etwa 0,25 bis 1,2 mm Durchmesser vorliegen. Im Unterschied zu herkömmlichen elektrischen Steckverbindungen, bei denen die Stromübertragung durch die leitenden Flächen von relativ großen Metallstiften und Metallhülsen erfolgt, ist bei den LWL die Signalübertragung naturgemäß nur über die Stirnflächen der Leiterenden möglich, was deren genau fluchtende Positionierung in dem Steckerteil ebenso wie im Aufnahmeteil des Steckverbinders mit möglichst geringem konstanten Abstand der beiden Stirnflächen voraussetzt. Darüber hinaus ist eine feste Fixierung der mechanisch empfindlichen Leiterenden in den Gehäusen der Verbinderteile unerläßlich, um auch unter mechanischen Belastungen die genaue Positionierung der Leiterenden sicherzustellen.

Bei herkömmlichen Steckverbindern für Lichtwellenleiter, insbesondere für monofile Kunststoff-LWL's, bestehen die Gehäuse des Steckerteils und des Aufnahme- oder Mutterteils regelmäßig aus mehreren Einzelteilen aus Kunststoff, Metall oder auch Keramik. Die Endabschnitte von einem oder mehreren LWL's sind durch verschiedenartige Klemm- und Fixierelemente im jeweiligen Gehäuse so festgelegt, daß ihre ggf. geschliffenen Endflächen bei zusammengesteckten Verbinderteilen sich genau gegenüberliegen. Neben dem durch die mehrteilige Gehäuseausführung begründeten hohen Herstellungs- und Montageaufwand haben diese bekannten Verbinderausführungen die weiteren Nachteile, daß die empfindlichen Oberflächenschichten der abisolierten Leiterenden durch die Fixierelemente bei der Montage und/oder durch Zug- und Druckkräfte beschädigt werden können. Darüber hinaus sind die mehrteiligen Gehäuse nicht gasund flüssigkeitsdicht, so daß Feuchtigkeit und aggressive Medien die jeweiligen Leiterenden angreifen und beschädigen können. Schließlich haben herkömmliche Steckverbinder für zwei und mehrere parallele Lichtwellenleiter erhebliche Abmessungen. Bei Verwendung von zwei und mehreren LWL's in einem Kabel müssen die einzelnen Leiter voneinander getrennt und gesondert durch eigene Steckverbinder miteinander gekoppelt werden.

Die Europäische Patentanmeldung EP-A-156 608 offenbart einen Steckverbinder der Art, wie er im ersten Teil von Anspruch 1 beschrieben ist. Im Fall dieses herkömmlichen Steckverbinders sind die Endabschnitte der Lichtwellenleiter mit Muffen versehen.

Aufgabe der Erfindung ist es, einen Steckverbinder für Lichtwellenleiter, insbesondere für monofile Kunststoffleiter, zu schaffen, die bei geringen Abmessungen einfach und kostengünstig hergestellt werden können und auch unter mechanischen Beanspruchungen eine genaue und sichere gegenseitige Ausrichtung und Fixierung der zu verbindenden Leiterenden gewährleisten.

Diese Aufgabe wird erfindungsgemäß durch die kennzeichnenden Merkmale des Patentanspruchs 1 gelöst. Durch die einstückige Ausbildung des Kunststoffgehäuses für den Steckerteil und ggf. auch für den Mutter- bzw. Aufnahmeteil vereinfacht sich der Herstellungsvorgang erheblich, da lediglich die zuvor abgemantelten Leiterenden in eine entsprechende Gießform eingelegt werden müssen, die dann mit einem geeigneten zähfesten Kunststoff ausgegossen bzw. ausgespritzt wird. Durch diesen Herstellungsvorgang ergibt sich der für die Praxis wesentliche Vorzug einer zuverlässigen Abdichtung der abisolierten Leiterenden ebenso wie des Übergangsbereichs zwischen dem abisolierten Leiterende und dem Isoliermantel. Ein weiterer Vorteil liegt bei Verwendung von Lichtwellenleitern aus durchsichtigem Kunststoff darin, daß die für die einwandfreie Signalübertragung wichtigen Endflächen der Lichtwellenleiter auf einfache Weise durch Schneiden, Schleifen od. dgl. feinbearbeitet werden können, was bei herkömmlichen Steckverbindern nicht in gleicher Weise möglich ist. Darüber hinaus wird durch die feste Einbettung der Leiterendabschnitte im Kunststoffgehäuse der Längsschrumpfung des LWL's bei Temperaturänderungen wegen der etwa gleichgroßen Wärmedehnungskoeffizienten der Kunststoffmaterialien des LWL's und des Gehäuses entgegengewirkt, was die optische Dämpfung des Verbinders insgesamt und auch Dämpfungsänderungen günstig beeinflußt.

Bei Kunststoff-LWL's wurde bisher das Umspritzen der abgemantelten Leiterendabschnitte als äußerst problematisch angesehen, weil durch die hohen Temperaturen des eingespritzten Gehäusematerials gravierende Änderungen der optischen Eigenschaften der Leiterendabschnitte durch übermäßige Aufheizung für unvermeidbar angesehen wurden. Diese Schwierigkeiten können bei der Herstellung des erfindungsgemäßen Verbinders dadurch überwunden werden, daß die Wandstärke der einzelnen Gehäuseabschnitte und das Gesamtvolumen des eingespritzten Kunststoffmaterials auf die Abmessungen und die Materialeigenschaften der eingesetzten LWL's abgestimmt klein gehalten werden und durch gießtechnische Maßnahmen für eine intensive Wärmeabfuhr gesorgt wird. Versuche haben bestätigt, daß bei erfindungsgemäß mit dem Gehäusekunststoff umspritzten Endabschnitten von Kunststoff-LWL's keine merkbaren Änderungen der optischen Eigenschaften auftreten. Die durchgehend feste Ummantellung der Leiterendabschnitte mit dem Gehäusematerial gewährleistet ferner eine sichere und genaue Positionierung der beiden Endflächen der zu verbindenden LWL's und einen wirksamen Schutz der empfindlichen Endabschnitte gegen mechanische oder andere Einwirkungen während der Handhabung und im Betrieb. Schließlich wird durch das Umspritzen nicht nur des Endabschnitts, sondern auch des daran anschließenden Mantelteils des LWL's mit dem Gehäusematerial eine zusätzliche feste Verbindung zwischen diesen beiden Bauteilen geschaffen.

Durch die geringen Abmessungen der erfindungsgemäßen Verbinder ergeben sich weitere anwendungsspezifische Vorteile beispielsweise bei der Integration in komplexe Leitungs-Bussysteme auf geringem Raum, wie sie zur Signalübertragung in modernen Fahrzeugen verlangt wird. Insbesondere bei der Verbindung von mehradrigen LWL-Kabeln wirken sich die geringen Abmessungen der erfindungsgemäßen Steckverbinder positiv aus, da die Leiterenden ohne weiteres in einem einzigen Gehäuse in vorab optimierter unverwechselbarer Anordnung untergebracht werden können.

Eine besonders zweckmäßige Ausgestaltung der Erfindung zeichnet sich dadurch aus, daß der Steckerteil an seiner Vorderseite einen vorspringenden profilierten Führungsansatz aufweist, in den die abisolierten Enden eines oder mehrerer Lichtwellenleiter eingebettet sind. Das einstückige Kunststoffgehäuse des Aufnahmeteils weist bei dieser Ausführung eine axiale Öffnung bzw. Ausnehmung auf, deren Form und Abmessungen dem Profil des Führungsansatzes des Steckerteils angepaßt ist. Durch geeignete Profilierung und die Ausbildung von Zentrierflächen und Anschlagschultern wird sichergestellt, daß bei eingeschobenem Steckerteil die Stirnflächen der in diesem eingebetteten Leiterenden den Stirnflächen der im Aufnahmeteil eingebetteten Leiterenden genau gegenüberliegen, wobei durch die hohe mechanische Stabilität des Führungsansatzes am Steckerteil sowie durch die relativ großen Führungsflächen Verkantungen der beiden Teile beim Einschieben ausgeschlossen werden. Die Querschnittsprofilierung und/oder die zusammenwirkenden Zentrierflächen wirken als Verdrehsicherung und verhindern eine Vertauschung der Leiter beim Einschieben des Steckers.

Um die Leiterverbindung auch bei Einwirkung von unerwünschten Zugkräften aufrechtzuerhalten, sind in einer weiteren Ausgestaltung der Erfindung Arretierelemente vorgesehen, die beispielsweise im formgespritzten Kunststoffgehäuse des Aufnahmeteils in Form von zwei parallelen frontseitig vorstehenden Federzungen ausgebildet sein können, welche bei voll eingeschobenem Steckerteil an diesem angeformte Verriegelungsansätze umgreifen.

Um die optischen Eigenschaften der Endabschnitte der Kunststoff-Lichtwellenleiter durch die beim Gießvorgang freiwerdende Wärme nicht zu beeinträchtigen, ist es weiterhin zweckmäßig, wenn zumindest die abisolierten Enden der Lichtwellenleiter mit einem wärmeisolierenden Schutzmantel beschichtet sind, der auch haftvermittelnde Eigenschaften haben kann.

Weitere Besonderheiten und Vorzüge des erfindungsgemäßen Steckverbinders ergeben sich aus der folgenden Beschreibung mehrerer bevorzugter Ausführungsbeispiele. Es zeigen:
- Fig. 1A, 1B: einen Steckerteil mit zwei Lichtwellenleitern des Steckverbinders in perspektivischer Seitenansicht und im Längsschnitt;
- Fig. 2A, 2B: einen Aufnehmerteil für den Steckerteil nach Fig. 1 in perspektivischer Darstellung und im Längsschnitt;
- Fig. 3: eine andere Ausführung eines Steckverbinders in schematischer Seitenansicht;
- Fig. 4: den Aufnahmeteil nach Fig. 3 in teilgeschnittener perspektivischer Darstellung;
- Fig. 5: einen Steckerteil für nur einen Lichtwellenleiter in schematischer Seitenansicht.

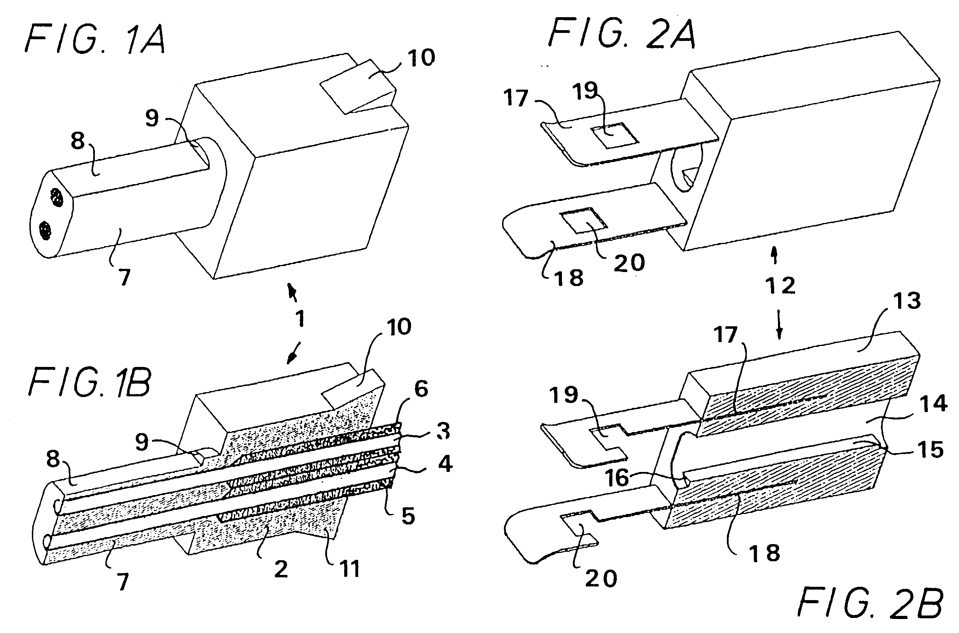

Der in Fig. 1 dargestellte Steckerteil 1 enthält ein Kunststoffgehäuse 2, in dem zwei achsparallele Lichtwellenleiter 3, 4 durch Umgießen eingebettet sind. Jeder Lichtwellenleiter ist von einem Schutzmantel 5, 6 umgeben. Wie dargestellt, wurden diese Schutzmäntel 5, 6 in den vorderen Endabschnitten der beiden Lichtwellenleiter 3, 4 entfernt. Der Steckerteil 1 weist einen stirnseitigen profilierten Ansatz 7 auf, der einstückig mit dem Gehäuse 2 aus Kunststoff geformt ist und in dem die abisolierten Endabschnitte der beiden Lichtwellenleiter 3, 4 verlaufen. An der Oberseite dieses sich axial erstreckenden Ansatzes 7 ist eine ebene Zentrierfläche 8 ausgebildet, die an einer Schulter 9 endet. Ferner sind am rückseitigen Ende des Gehäuses 2 zwei seitlich schräg vorstehende Ansätze 10, 11 angeformt, die Arretierelemente darstellen.

Der in den Fig. 2 dargestellte Aufnahmeteil 12 weist ein einteilig gegossenes Kunststoffgehäuse 13 auf, in dem eine zentrale durchgehende Öffnung bzw. Ausnehmung 14 ausgebildet ist, deren Querschnitt dem Querschnittsprofil des Führungsansatzes 7 des Steckerteils 1 entspricht. An einer Schmalseite dieser Ausnehmung 14 ist eine ebene Zentrierfläche 15 ausgebildet, die beim Einschieben des Steckerteils 1 mit der an dessen Ansatz 7 ausgebildeten Zentrierfläche 8 zusammenwirkt. Am Ende dieser Zentrierfläche 15 befindet sich eine Schulter 16. Zur Arretierung der beiden Teile 1 und 12 in voll eingeschobenem Zustand sind zu beiden Seiten der Ausnehmung 14 zwei Federzungen 17, 18 aus Metall oder einem geeigneten Kunststoff im Gehäuse 13 eingebettet, in deren stirnseitig vorstehende Abschnitte je eine Ausnehmung 19, 20 eingestanzt ist. Die freien Enden dieser Federzungen sind aufgebogen, um ein Überschieben über die obere bzw. untere Fläche des Steckerteil-Gehäuses 2 zu erleichtern. In voll eingeschobenem Zustand greifen die am Steckerteilgehäuse 2 angeformten schrägen Ansätze 10, 11 in die ausgestanzten Löcher 19, 20 der Federzungen 17, 18, so daß eine zugfeste Verriegelung beider Teile erfolgt.

Zum Einschieben des in Fig. 1 dargestellten Steckerteils wird dieser um 180° um seine Längsachse gedreht, so daß sich die in Fig. 1 obenliegend dargestellte Zentrierfläche 8 unten befindet. Durch eine weitere Drehbewegung wird der Stecker dann so in den Aufnahmeteil 12 eingeführt, daß sein Führungsansatz 7 in den Ausschnitt 14 des Aufnahmeteils 12 von der in Fig. 2 linken Stirnseite her eingeschoben werden kann.

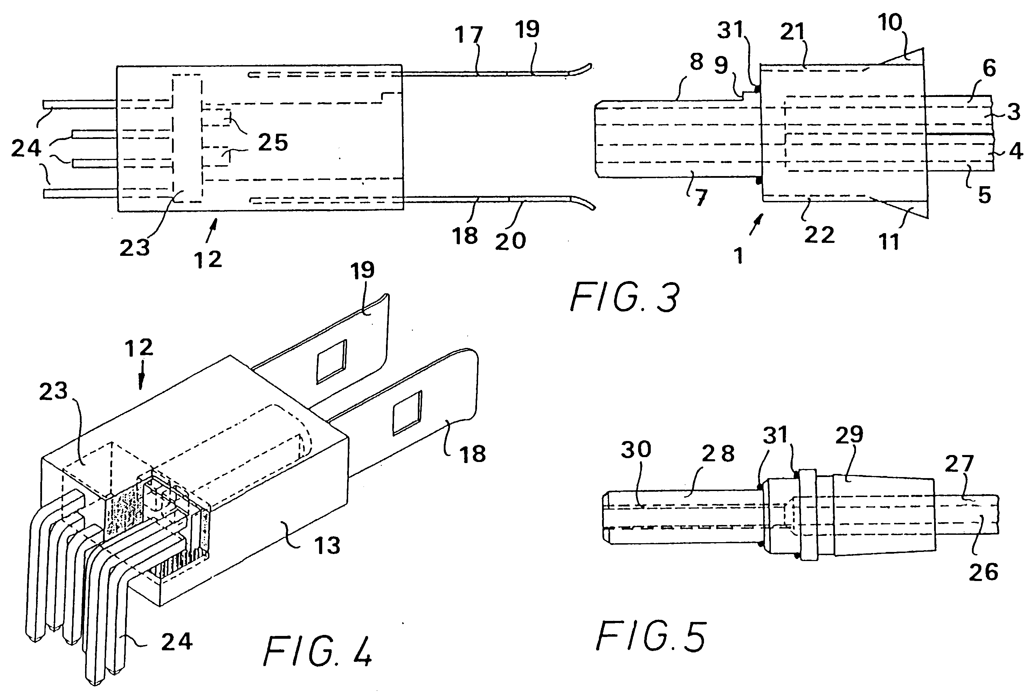

Die in Fig. 3 dargestellte Ausführung des erfindungsgemäßen Steckverbinders entspricht im wesentlichen der Ausführung nach Fig. 1, 2, so daß gleiche Einzelteile auch mit den entsprechenden Bezugszeichen gekennzeichnet sind. In der oberen und der unteren Wand des Steckergehäuses sind in Fortsetzung der Ansätze 10, 11 Längsnuten 21, 22 ausgebildet, in denen beim Einschieben des Steckerteils 1 in den Aufnahmeteil 2 die beiden vorstehenden Abschnitte der Federzungen 17, 18 geführt werden.

Der Aufnahmeteil 12 besitzt ebenfalls ein einstückiges Kunststoffgehäuse, in dessen hinterem Teil ein opto-elektrischer Wandler 23 eingebettet ist, von dem elektrische Kontaktstifte 24 geradlinig oder - wie in Fig. 4 dargestellt - abgebogen nach außen aus dem Gehäuse herausführen. Am Wandler sind zwei Elemente 25 angeordnet, die bei voll eingeschobenem Steckerteil 1 den Stirnflächen der an der vorderen Endseite des Ansatzes 7 endenden Lichtwellenleiter 3, 4 genau gegenüberliegen. Die in Fig. 5 dargestellte Steckerausführung ist nur für einen einzigen Lichtwellenleiter 26 ausgelegt, dessen Mantel 27 im vorderen Endabschnitt entfernt wurde, so daß sich der abgemantelte Endabschnitt des Lichtwellenleiters 26 in einem hier zylindrischen Führungsansatz 28 erstreckt und in dessen Stirnfläche endet. Das Gehäuse 29 ist auch bei dieser Ausführung einstückig aus einem geeigneten Kunststoff ausgeführt. Um während des Einspritzvorganges des heißen Kunststoffes in die Spritzform den abgemantelten Endabschnitt des Lichtwellenleiters nicht übermäßig aufzuheizen, kann dieser Endabschnitt mit einer wärmeisolierenden Schicht 30 vor dem Spritzvorgang versehen werden, wobei diese Schicht 30 auch die Funktion eines Haftvermittlers übernehmen kann. Es ist auch möglich, den Lichtwellenleiter 26 ohne diese Schutzschicht 30 zu umspritzen.

Wie aus den Fig. 3 und 5 ersichtlich, ist ein O-Dichtring 31 an der vorderen Stirnwand des Steckerteilgehäuses 2, 29 angeordnet, der eine zuverlässige Abdichtung der beiden Gehäuse bewirkt und durch seine Eigenelastizität die voll eingeschobenen Verbinderteile unter einer gewissen Spannung hält, was die Positioniergenauigkeit und die Widerstandsfähigkeit gegen äußere Einflüsse, z. B. gegen Vibrationen, wesentlich verbessert.

Die Erfindung ist nicht auf die dargestellten Ausführungsbeispiele beschränkt. So können beispielsweise auch andere Arretiermittel zur festen gegenseitigen Fixierung des Steckerteils am Aufnahmeteil vorgesehen sein, beispielsweise vorstehende Federzungen, die sich vollständig innerhalb der Gehäuse erstrecken. Darüber hinaus können in besonderen Anwendungsfällen auch statt des einzigen Führungsansatzes 7 am Steckerteil zwei oder mehrere Ansätze ausgebildet sein, die in einer entsprechenden Anzahl an Ausnehmungen im Aufnahmeteil eingeschoben werden und jeweils einen Lichtwellenleiter umschließen können. Aus Stabilitätsgründen ist jedoch die in den Zeichnungen dargestellte einteilige Ausbildung des Führungsansatzes vorzuziehen.

## Patentansprüche

1. Steckverbinder für ein- und mehrfaserige Lichtwellenleiter (LWL), bestehend
aus einem Steckerteil und einem Aufnahmeteil, die jeweils ein Gehäuse mit Führungs- und Arretierelementen aufweisen, in dem die Endabschnitte der zu verbindenden Lichtwellenleiter gleichachsig festgelegt sind,
**dadurch gekennzeichnet**,
daß die Gehäuse Kunstoffgehäuse sind, und daß zumindest das Kunststoffgehäuse (2) des Steckerteils (1) einteilig ausgebildet und durch Umgießen oder Umspritzen an den zumindest teilweise abisolierten Endabschnitten der Lichtwellenleiter (3, 4) abgedichtet befestigt ist.

2. Steckverbinder nach Anspruch 1,
dadurch gekennzeichnet,
daß der Steckerteil (1) an seiner Vorderseite einen vorspringenden profilierten Führungsansatz (7) aufweist, in dem die abisolierten Enden der Lichtwellenleiter (3, 4) eingebettet sind.

3. Steckverbinder nach Anspruch 2,
dadurch gekennzeichnet,
daß die Stirnflächen des Führungsansatzes zusammen mit denen der Lichtwellenleiter gemeinsam feinbearbeitet sind.

4. Steckverbinder nach einem der Ansprüche 1 bis 3,
dadurch gekennzeichnet,
daß am Führungsansatz (7) mindestens eine Zentrierfläche (8) und ein Endanschlag (9) ausgebildet sind.

5. Steckverbinder nach Anspruch 1,
dadurch gekennzeichnet,
daß das einstückige Kunststoffgehäuse (13) des Aufnahmeteils (12) eine axiale Öffnung (14) mit einer inneren Zentrierfläche (15) und einem Endanschlag (16) aufweist, deren Form und Abmessungen dem Querschnittsprofil des Führungsansatzes (7) des Steckerteils (1) angepaßt sind.

6. Steckverbinder nach Anspruch 5,
dadurch gekennzeichnet,
daß als Arretierelemente im formgespritzten Kunststoffgehäuse (13) des Aufnahmeteils (12) zwei parallele frontseitig vorstehende Federzungen (17, 18) eingebettet sind, die bei voll eingeschobenem Steckerteil an diesem seitlich angeformte Verriegelungsansätze (10, 11) umgreifen.

7. Steckverbinder nach Anspruch 5 oder 6,
dadurch gekennzeichnet,
daß im Kunststoffgehäuse (13) des Aufnahmeteils (12) optoelektronische Bauteile (23) mit elektrischen Anschlußkontakten (24) an einer Seite und Lichtleitzapfen (25) an der Gegenseite eingegossen sind.

8. Steckverbinder nach einem der Ansprüche 1 bis 7,
dadurch gekennzeichnet,
daß die abisolierten Enden der Lichtwellenleiter (3, 4; 26) mit einem wärmeisolierenden Schutzmantel beschichtet sind, der auch haftvermittelnde Eigenschaften besitzt.

9. Steckverbinder nach einem der Ansprüche 1 bis 8,
dadurch gekennzeichnet,
daß mindestens ein elastisch verformbarer Dichtungsring (31) (O-Ring) zwischen den Kontaktflächen der beiden Kunststoffgehäuse (2; 13) angeordnet ist.

10. Steckverbinder nach einem der Ansprüche 1 bis 4,
dadurch gekennzeichnet,
daß das Kunststoffgehäuse (2; 13) des Aufnahmeteils (12) vorgefertigt ist und daß die Lichtwellenleiter (3, 4; 26) mit ihren abgemantelten Endabschnitten im Gehäuse des Aufnahmeteils durch Umgießen mit einem Kunststoffmaterial fixiert sind.

## Claims

1. A connector for single and multi-fibre beam waveguides (German abbreviation LWL) comprising a plug part and a receiving part each having a casing with guide and locking elements and in which the end portions of the beam waveguides for connection are coaxially secured, characterised in that the casings are plastic casings and at least the plastic casing (2) of the plug part (1) is in one piece and is secured and sealed by being cast or extruded around the at least partly stripped end portions of the beam waveguides (3, 4).

2. A connector according to claim 1, characterised in that the front of the plug part (1) has a projecting profiled guide extension (7) in which the stripped ends of the beam waveguides (3, 4) are embedded.

3. A connector according to claim 2, characterised in that the end faces of the guide extension are precision-machined together with the end faces of the beam waveguides.

4. A connector according to any of claims 1 to 3, characterised in that at least one centring surface (8) and one end abutment (9) are formed on the guide extension (7).

5. A connector according to claim 1, characterised in that the one-piece plastic casing (13) of the receiving part (12) has an axial opening (14) with an inner centring surface (15) and an end abutment (16), corresponding in shape and dimensions to the cross-sectional profile of the guide extension (7) on the plug part (1).

6. A connector according to claim 5, characterised in that the locking elements are two parallel spring tongues (17, 18) which are embedded in the injection-moulded plastic casing (13) of the receiving part (12) and project from the front, and, when the plug part is fully inserted, engage round locking extensions (10, 11) integrally formed laterally on the plug part.

7. A connector according to claim 5 or 6, characterised in that opto-electronic components (23) with electric connecting contacts (24) on one side and light-guiding projections (25) on the opposite side are cast in the plastic casing (13) of the receiving part (12).

8. A connector according to any of claims 1 to 7, characterised in that the stripped ends of the beam waveguides (3, 4; 26) are coated with a heat-insulating protective jacket which also has adhesive properties.

9. A connector according to any of claims 1 to 8, characterised in that at least one resiliently deformable sealing ring (31) (O-ring) is disposed between the contact surfaces of the two plastic casings (2; 13).

10. A connector according to any of claims 1 to 4, characterised in that the plastic casing (2; 13) of the receiving part (12) is prefabricated and the stripped end portions of the beam waveguides (3, 4; 26) are secured in the casing of the receiving part by a plastic material being cast therearound.

## Revendications

1. Connecteur à fiches pour guides d'ondes lumineuses monofibre et multifibre, composé d'une partie mâle et d'une partie femelle comportant chacune un boîtier qui est pourvu d'éléments de guidage et d'arrêt et dans lequel les portions extrêmes des guides d'ondes lumineuses à connecter sont immobilisées avec le même axe, caractérisé en ce que les boîtiers sont des boîtiers en matière plastique, et en ce qu'au moins le boîtier en matière plastique (2) de la partie mâle (1) est conçu d'un seul tenant et est fixé de manière étanche par coulage ou par projection aux portions extrêmes au moins partiellement dénudées des guides d'ondes lumineuses (3, 4).

2. Connecteur à fiches selon la revendication 1, caractérisé en ce que la partie mâle (1) comporte, sur son côté avant, un embout de guidage profilé en saillie (7), dans lequel sont incluses les extrémités dénudées des guides d'ondes lumineuses (3, 4).

3. Connecteur à fiches selon la revendication 2, caractérisé en ce que les faces frontales de l'embout de guidage sont soumises à une superfinition conjointement avec celles des guides d'ondes lumineuses.

4. Connecteur à fiches selon l'une des revendications 1 à 3, caractérisé en ce qu'au moins une surface de centrage (8) et une butée d'extrémité (9) sont prévues sur l'embout de guidage (7).

5. Connecteur à fiches selon la revendication 1, caractérisé en ce que le boîtier en matière plastique (13) en une seule pièce de la partie femelle (12) présente une ouverture axiale (14) qui est pourvue d'une surface intérieure de centrage (15) et d'une butée d'extrémité (16) et dont la forme et les dimensions sont adaptées au profil transversal de l'embout de guidage (7) de la partie mâle (1).

6. Connecteur à fiches selon la revendication 5, caractérisé en ce que les éléments d'arrêt sont constitués par deux languettes élastiques parallèles (17, 18) qui sont incluses dans le boîtier (13) en matière plastique rapportée de la partie femelle (12), qui font saillie à l'avant et qui, une fois la partie mâle complètement insérée, entourent des ergots de verrouillage (10, 11) moulés sur celle-ci.

7. Connecteur à fiches selon la revendication 5 ou 6, caractérisé en ce que, dans le boîtier en matière plastique (13) de la partie femelle (12), sont inclus des composants optoélectroniques (23) comportant, sur un côté, des contacts de connexion électriques (24) et, sur le côté opposé, des broches de guidage de lumière (25).

8. Connecteur à fiches selon l'une des revendications 1 à 7, caractérisé en ce que les extrémités dénudées des guides d'ondes lumineuses (3, 4 ; 26) sont revêtues d'une gaine protectrice calorifuge possédant également des propriétés de pontage.

9. Connecteur à fiches selon l'une des revendications 1 à 8, caractérisé en ce qu'au moins un anneau d'étanchéité déformable élastiquement (31) (joint torique) est disposé entre les surfaces de contact des deux boîtiers en matière plastique (2 ; 13).

10. Connecteur à fiches selon l'une des revendications 1 à 4, caractérisé en ce que le boîtier en matière plastique (2 ; 13) de la partie femelle (12) est préfabriqué, et en ce que les portions extrêmes dénudées des guides d'ondes lumineuses (3, 4 ; 26) sont immobilisées dans le boîtier de la partie femelle par enrobage avec une matière plastique.
